# EUROPEAN PATENT APPLICATION

(11) **EP 2 800 014 A1**
(43) Date of publication of application: **05.11.2014**
(21) Application number: 14150808.5
(22) Date of filing: 10.01.2014
(51) Int. Cl.: G06F 17/30

(54) **Method for searching curriculum vitae's on a job portal website, server and computer program product therefore**

(30) Priority: 29.04.2013 EP 13165791
(71) Applicant: StepStone GmbH, 10969 Berlin (DE)
(72) Inventor: de Rassenfosse, Christophe, 1080 Brussels (BE)
(74) Representative: Brantsandpatents bvba

(57) **Abstract**

The present invention relates a method, a server and a computer program product for searching curriculum vitae's on a job portal website.

## Description

### FIELD OF THE INVENTION

The present invention relates a method, a server and a computer program product for searching curriculum vitae's on a job portal website.

### BACKGROUND

With an enormous amount of data being available and accessible on a job portal website, searching and information retrieval techniques evolve and improve. Only the provision of a large number of curriculum vitae's (CV's) in the job portal database does not satisfy the need of a recruiter.

Numerous techniques with extensive search options are known for finding qualified candidates according to predetermined categories and/or according to a search query.

Document US20120072432A1 discloses a typical data management method used in facet-based filtering of social network update data, which involves communicating facet-filtered network-update information to social-networking site to update presentation of selected network-update information.

Despite the above developments, CV searching still presents the usual recruiter with a multitude of results, only a small portion of which are relevant or even accessed by the user. Typical CV search query methods comprise search forms with many fields, extra criteria and a huge list of results.

Problem with these methods is that the search and result list is overloaded and gives a feel of information overload. Also, the search behavior differs based on personal preferences and experience. Often these searches are difficult and time-consuming for recruiters.

There is a need for a CV searching method which guides the recruiter better, and is easier and quicker in use. It is the goal of the invention to provide a more clear flow of information, guiding the recruiter easily and quickly to relevant CV results.

### SUMMARY

The present invention provides in one embodiment, a method for searching curriculum vitae's on a job portal website comprising the following computer-implemented steps:
- determining an intermediate CV search by executing following steps:
   a) receiving one or more keywords from a recruiter;
   b) analyzing said keyword(s);
   c) providing at least one suggested matching search term and/or corresponding category dimension from a web server;
   d) said recruiter selecting one of said suggested matching search terms;
- refining said intermediate CV search by one or more subsequent iterations of said steps a to d;
- providing CV results of a CV search to said recruiter, wherein said CV search is generated based on said selected suggested matching search terms.

A recruiter searches CV's through subsequently entering one or more keywords, whereby a list of relevant search terms and/or corresponding category dimensions is suggested, wherein the recruiter iteratively selects a relevant search term and hereby refines the search query in order to receive a result list of CV's.

It is advantageous as this allows a recruiter to quickly find more relevant CV results by an easy and comprehensible iterative method of refining a CV search query. Also it allows providing a clear flow of information, guiding the recruiter through a less overloaded, difficult and time-consuming CV searching.

In a second embodiment, the present invention provides a server for searching curriculum vitae's on a job portal website.

In a third embodiment, the present invention provides a computer program product for searching curriculum vitae's on a job portal website.

While multiple embodiments are disclosed, still other embodiments of the present invention will become apparent to those skilled in the art from the following detailed description, which shows and describes illustrative embodiments of the invention. As will be realized, the invention is capable of modifications in various obvious aspects, all without departing from the spirit and scope of the present invention. Accordingly, the drawings and detailed description are to be regarded as illustrative in nature and not restrictive.

### DESCRIPTION OF THE FIGURES

Further features, advantages and objects of the present invention will become apparent for the skilled person when reading the following detailed description of embodiments of the present invention, when taken in conjunction with the figures of the enclosed drawings.
**FIG. 1** is a flow-chart diagram illustrating an exemplary method for searching curriculum vitae's on a job portal website.
**FIG. 2****,** **3** and **4** illustrate a job portal web page in accordance with one embodiment of the invention.

### DETAILED DESCRIPTION OF THE INVENTION

The present invention relates to a method for searching curriculum vitae's on a job portal website. Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a curriculum vitae" refers to one or more than one curriculum vitae.
"Comprise," "comprising," and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "widget" is used herein to refer to an element of a graphical user interface (GUI) that displays an information arrangement changeable by the user, such as a checkbox or a text box. The defining characteristic of a widget is to provide a single interaction point for the direct manipulation of a given kind of data. In other words, widgets are basic visual building blocks which, combined in an application, hold all the data processed by the application and the available interactions on this data.

The expression "text box" is used herein to refer to a kind of widget used when building a graphical user interface (GUI). A text box's purpose is to allow the user to input text information to be used by the program. Typically, a text box is a rectangle of any size, possibly with a border that separates the text box from the rest of the interface. Text boxes may contain zero, one, or two scrollbars. Text boxes usually display a text cursor (commonly a blinking vertical line), indicating the current region of text being edited. It is common for the mouse cursor to change its shape when it hovers over a text box.

In a first aspect the present invention provides a method for searching curriculum vitae's on a job portal website comprising the following computer-implemented steps:
- determining an intermediate CV search by executing following steps:
   a) receiving one or more keywords from a recruiter;
   b) analyzing said keyword(s);
   c) providing at least one suggested matching search term and/or corresponding category dimension from a web server;
   d) said recruiter selecting one of said suggested matching search terms;
- refining said intermediate CV search by one or more subsequent iterations of said steps a to d;
- providing CV results of a CV search to said recruiter, wherein said CV search is generated based on said selected suggested matching search terms.

The term "curriculum vitae" or "résumé" as used herein is to be understood as a summary of a job candidate his/her backgrounds, skills, job experience, education, qualifications, etc. Preferably, said summary comprises a collection of information from an individual or job candidate his/her backgrounds, skills, career path, career expectation, job experience, education, qualifications, etc. The term "curriculum vitae" or "résumé" as used herein could preferably also be understood as a profile on a professional network.

The term "job portal website" as used herein is preferably to be understood as a website dealing with curriculum vitaes, a website of a professional network dealing with profiles, a website of an interim or staff agency, or the like, which curriculum vitaes or profiles comprise a collection of information from an individual or job candidate his/her backgrounds, skills, career path, career expectation, job experience, education, qualifications, etc. Said website is preferably displayable on a computing device, which could be a desktop computer, laptop computer or a mobile device, such as a tablet computer or smart phone.

The term "matching search term" as used herein is to be understood as a dynamic method or algorithm performing an analysis on one or more keywords entered by a recruiter, whereby the best matching search terms are retrieved. Several techniques can be used, such as normalization, morphological analysis, filters or considering different morphological forms, abbreviations, derived and colloquial forms, synonyms, translations, hypernyms and hyponyms. Also, a synonym and translation dictionary can for example be run. Thus, said entered one or more keywords are analysed e.g. subsequently cleaned (e.g. correcting a typographical error), normalized, morphologically analysed and/or then transformed considering different morphological forms, abbreviations, derived and colloquial forms, synonyms, translations, hypernyms, hyponyms, etc. So said one or more keywords can be transformed and additional filters and/or functionalities can be run on this transformed keyword set, which comprises a special treatment for compounds, i.e. words formed with 2 or several individual words (mostly occurring in Germanic languages), detection and removal from the listing of misleading phrases. Finally, at least one search term matching this changed keyword set is to be found in a job portal database or (web) server with stored CV's.

The term "word completion" or "autocomplete" as used herein is to be understood as a dynamic method or algorithm performing a prediction of a keyword that the recruiter wants to type in but without the recruiter actually typing in completely. Preferably, word completion suggests keywords when entered keyword terms are not fully written, so e.g. only the starting letters of a keyword.

The term "category dimension" as used herein is to be understood as a category corresponding to a search term, hereby giving rise to dimensional distribution within searching the job portal database. Typical categories comprise job title, job category and/or job subcategory, job sector, education (i.e. level of education), skills, language skills, years of experience, availability (when job seeker is able to start new work), current professional situation, regions, type of contract, type of work and monthly salary. Another category dimension can be a keyword. When no dimension corresponding to a search term is created or exists in said job portal database, category "keyword" corresponds to a general searching of said one or more entered keywords, instead of a searching based on a category.

This is advantageous as this allows a recruiter to find relevant CV results quicker through an easier and comprehensible iterative method of refining a CV search query. Also it allows providing a clear flow of information. The recruiter is guided through a less overloaded, difficult and time-consuming CV searching.

This is also advantageous as using only one textbox, in contrast with e.g. several field-based boxes, leads to a more intuitive and comprehensive flow. More particularly, said method allows to be implemented with both desktop or laptop computers, as with devices with a smaller display area, e.g. mobile devices, such as tablet computers or smart phones. As less display area is required with only one text box (or field) to enter keywords, the recruiter keeps a better overview on the whole.

In a preferred embodiment of the present invention, said step c comprises providing from a web server at least one suggested matching search term and corresponding category dimension.

This is advantageous as this allows a recruiter to find relevant CV results quicker. Refining a CV search query is facilitated by the selection of combinations of suggested matching search term and corresponding category dimension. This leads to an easier and more comprehensible iterative method of CV searching.

In a preferred embodiment of the present invention, said received one or more keywords from a recruiter comprise partially entered one or more keywords.

Preferably, said analyzing of said keyword(s) comprises a "word completion" or "autocomplete" prediction.

In a more preferred embodiment of the present invention, steps a, b and c are re-executed when said recruiter amends said one or more keywords by one or more characters.

It is advantageous as this allows refreshing of suggested matching search terms with every character change in said entered keywords.

In a more preferred embodiment of the present invention, said at least one suggested matching search term is provided based on correspondence between a partially entered one or more keywords and the initial, middle or end portion of said at least one suggested matching search.

This allows better and more relevant suggestions, as similarity is taken into account also for a middle or end portion of a matching search term, next to the courant beginning (initial) portion.

In a preferred embodiment of the present invention, the maximum number of said suggested matching search terms is 2 to 20, preferably 5 to 15, more preferably 5 to 10, most preferably 7.

This prevents an excess of suggestions, and therefore allows an easier, comprehensible and quicker way of refining a CV search.

In a preferred embodiment, the recruiter is able to insert several criteria separating them by a separators such as e.g. a comma, semi-colon or dot. As soon as the recruiter inserts a separator, a suggestion will be shown for query after separator. For example: the recruiter inserts query "English" and a suggestion is shown for this query. Then the recruiter adds a separator and inserts a next search query, "Dutch". Suggestions will be shown for second search query. The logic is an "AND"-operation between both entered queries.

In a preferred embodiment of the present invention, intermediate selected suggested matching search terms are displayed.

This is advantageous as this allows a clear overview on the intermediate selected search query.

In a more preferred embodiment of the present invention, one or more intermediate selected suggested matching search terms can be removed from said CV search.

This allows the recruiter to adjust less accurate selections within the CV search in order to move forward quickly to relevant CV results in the end.

In a preferred embodiment of the present invention, ranking said suggested matching search terms is based on a category dimension hierarchy.

More preferably, suggested matching search terms returned to said recruiter can be provided according to a ranking algorithm following a hierarchy of job title, job description, skills, education, work preferences and others, i.e. from high to low relevancy. Further suggested matching search terms corresponding to 'job title' and/or 'job description' can be ranked based on a job date, i.e. relating to the freshest experience, which will lead to a higher ranking.

For example, the recruiter searches for "Product manager", and if the keyword "Product manager" is found within a job title section in a job seeker's CV, such match will get the most "ranking points". If the keyword "Product manager" is found within the job description of a job seeker's CV, such match will get lower ranking than for the job title category.

Most preferably, the date of experience is considered as an extra criteria in said ranking algorithm. A match in the most fresh work experience will be ranked higher than a match in past work experience.

In a more preferred embodiment of the present invention, ranking said suggested matching search terms is partly based on previously selected suggested matching search terms.

It is advantageous as a correlation with previously entered and/or selected search terms improves the relevancy of suggested matching search terms.

In a more preferred embodiment of the present invention, ranking said suggested matching search terms is partly based on statistically relevant sequential patterns in subsequently selected suggested matching search terms and corresponding category dimension.

It is advantageous as a correlation with said statistically relevant sequential patterns of entered and/or selected suggested matching search terms improves the relevancy of suggested matching search terms.

In a preferred embodiment of the present invention, said suggested matching search terms are provided in a dropdown list. This provides a clear, organized and orderly view on said suggested matching search terms.

In a preferred embodiment of the present invention, any suggested matching search term and corresponding category dimension of said at least one suggested matching search term and corresponding category dimension from a web server is provided as a list item in a dropdown list.

In a preferred embodiment of the present invention, extra search criteria can be selected.

In a preferred embodiment of the present invention, the relevancy of the one or more selected suggested matching search terms can be adjusted. This allows the recruiter to receive more relevant CV results.

In a preferred embodiment of the present invention, one or more call-to-action elements are provided, preferably said one or more call-to-action elements comprising a CV agent and a Save button.

The term "call-to-action element" is used herein tot refer to elements in a web page that solicit an action from the user. By preference said call-to-action elements are clickable buttons. These buttons can be clicked on and when clicked, an action is performed. Examples of such clickable elements can be a save-button, send-button, a search-button, an apply-button, etc. A CV agent corresponds to a search engine that can email the recruiter the e.g. 20 newest and most recently updated CVs matching the entered search criteria. A save-button leads to saving all or individual CV results of a corresponding CV search to the job portal or to an account. These allow an easy and quick recruitment means.

In a preferred embodiment of the present invention, said CV results can be provided in a 'preview' mode. This allows the implementation of credits for a recruiter to use when wanting to view CV results in 'normal' mode.

In a preferred embodiment of the present invention, said provided CV results are ranked based on relevancy. This allows a recruiter to quickly find adequate CV results.

In a preferred embodiment of the present invention, the maximum number of said provided CV results is 1 to 100, preferably 5 to 50, more preferably 5 to 20.

In a preferred embodiment of the present invention, said recruiter is replaceable by a job seeker and CV is replaceable by job listing.

Foregoing aspects also apply to this method regarding said suggested matching search terms, said removing of selected suggest matching search terms, extra search criteria, call-to-action elements, preview mode, provided CV results, ranking, etc.

In a second aspect the present invention provides a server for searching curriculum vitae's on a job portal website, comprising at least one processor, the at least one processor configured to:
- determining an intermediate CV search by executing following steps:
   a) receiving one or more keywords from a recruiter;
   b) analyzing said keyword(s);
   c) providing at least one suggested matching search term and/or corresponding category dimension from a web server;
   d) said recruiter selecting one of said suggested matching search terms;
- refining said intermediate CV search by one or more subsequent iterations of said steps a to d;
- providing CV results of a CV search to said recruiter, wherein said CV search is generated based on said selected suggested matching search terms.

In a third aspect the present invention provides a computer program product for searching curriculum vitae's on a job portal website, said computer program product comprising at least one computer-readable storage medium having computer-readable program code portions stored therein, the computer-readable program code portions comprising instructions for:
- determining an intermediate CV search by executing following steps:
   a) receiving one or more keywords from a recruiter;
   b) analyzing said keyword(s);
   c) providing at least one suggested matching search term and/or corresponding category dimension from a web server;
   d) said recruiter selecting one of said suggested matching search terms;
- refining said intermediate CV search by one or more subsequent iterations of said steps a to d;
- providing CV results of a CV search to said recruiter, wherein said CV search is generated based on said selected suggested matching search terms.

### EXAMPLES

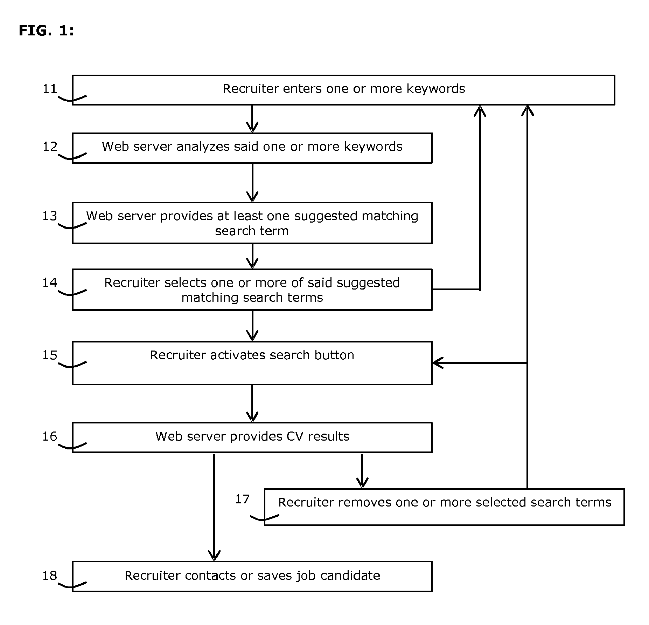

**FIG. 1** is a flow-chart diagram illustrating an exemplary method for searching curriculum vitae's on a job portal website.

A recruiter enters one or more keywords **(block 11)** on the job portal website in order to determine an intermediate CV search. A web server connected to a computing device of the recruiter will receive and will analyze said one or more keywords **(block 12).**

Subsequently said web server will provide at least one suggested search term **(block 13)** matching said entered one or more keywords. The recruiter then can select one or more of said suggested matching search terms **(block 14).** Hereby the recruiter determines a first intermediate CV search query.

The recruiter can refine this intermediate CV search by again entering one or more keywords and hereby iteratively following the previous steps **(block 11 - block 14).** Also the recruiter can opt for activating the search, by e.g. clicking on a search button **(block 15).** As a result said web server will perform a search on the CV database generated based on the determined CV search query and provide found CV results to the recruiter **(block 16).**

At the one hand, said recruiter can contact or save a CV and/or a corresponding job candidate **(block 18).** At the other hand, to further improve the CV search said recruiter can also remove one or more selected search terms **(block 17).** Hereafter, the recruiter can again enter one or more new keywords **(block 11)** to further refine the CV search or again activate the search button **(block 15).**

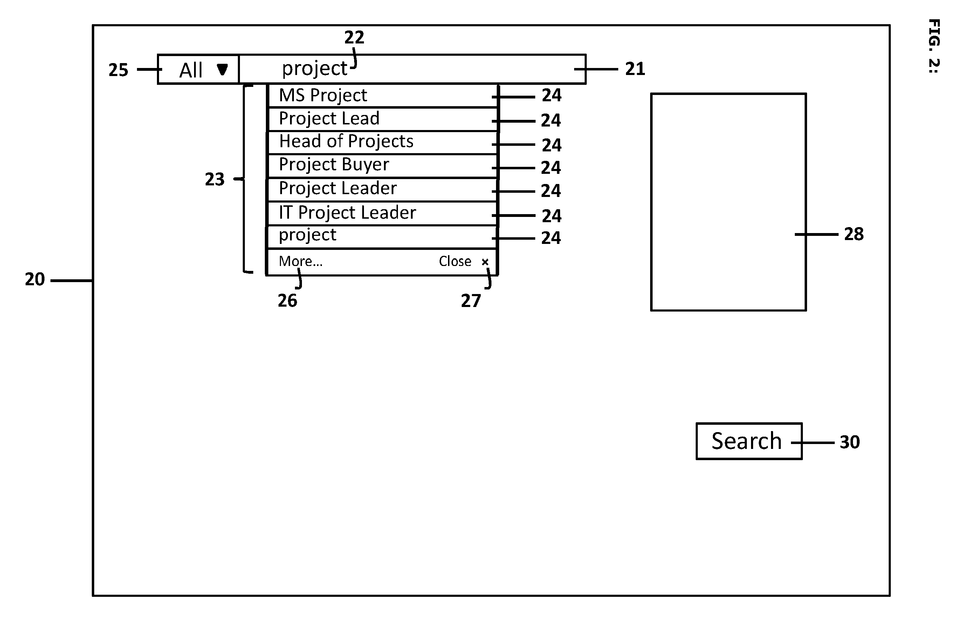

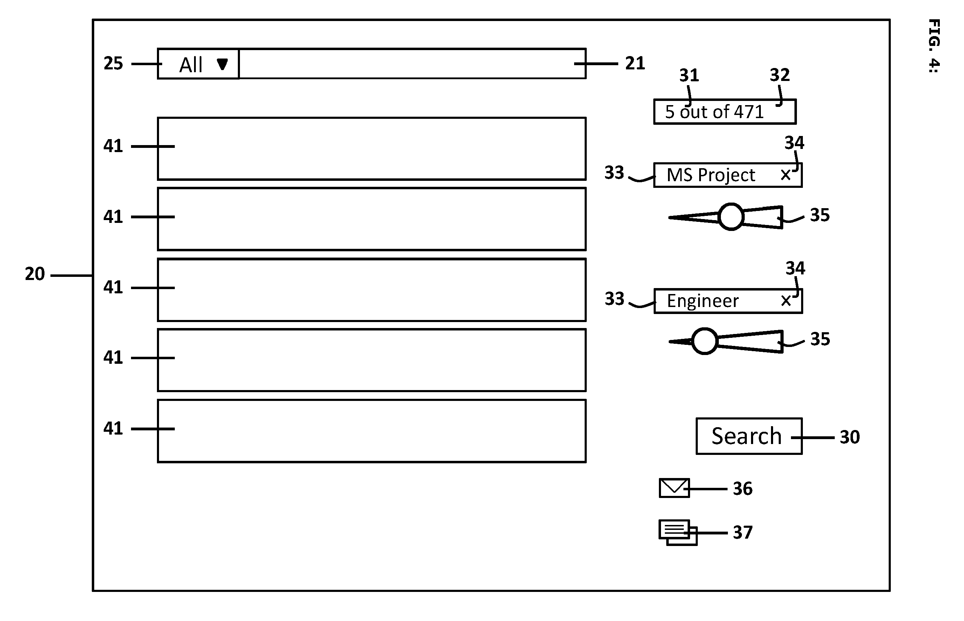

**FIG. 2****,** **3** and **4** illustrate a job portal web page in accordance with one embodiment of the invention.

When a recruiter starts typing a search query the method will show up with relevant suggestions matching the recruiter's input. The recruiter is able to choose one or more suggestions from a drop-down list. This drop-down list does not close when the recruiter selects criteria, so the recruiter is able to choose other criteria or refine input query.

**FIG. 2** illustrates a job portal web page **(20)** wherein a recruiter starts a CV search by typing the keyword 'project' **(22)** in a freetext box **(21).** As a result of this, 7 suggested matching search terms **(24)** appear. Said suggested matching search terms are provided in a dropdown list **(23).**

Note that also that word completion is executed, so unfinished keywords as 'proj' or 'projec' also can give rise to (potentially different) suggested matching searching terms **(24).**

As the user will have the option to select several of the search criteria, the search suggest box **(23)** does not close upon selection but rather be closed manually by the recruiter by clicking on the close button **(27).**

Next to this, the recruiter is also provided the option to select extra criteria via clicking on the "More"-area **(26)** of the web page **(20).** Hereby, the suggestion list **(23)** would expand and the recruiter would be able to see more relevant suggestions. For example 10 extra suggestions and again a "More"-area **(26)** is displayed, allowing the recruiter to provide even more suggestions, and so on. Each time the recruiter clicks on "More"-area **(26),** e.g. 10 more suggestions are added to said dropdown list **(23).**

Preferably, there is also an information block **(28)** to inform the recruiter on how to enter the criteria to their CV search. When the recruiter enters the first criteria, said information block **(28)** is removed and replaced with the chosen criteria visible in the right side menu.

Optionally, a second information block can be provided above said freetext box **(21).** Said second information block comprises tips on how best to perform a search. This second information block only appears the first time a recruiter uses the CV searching method on the job portal web page **(22).** It is advantageous as it guides the recruiter better to relevant CV results.

The recruiter also has the possibility to select a widget from a widget dropdown box **(25).** This widget dropdown box **(25)** can e.g. provide options such as 'keyword', 'workexperience', 'languages', 'education', 'personal details' or 'ambition and preferences'. If the recruiter selects one widget option, the method will only select suggested matching search terms **(24)** for the entered search term **(22)** related to the selected widget option or category.

In this example the recruiter will select the suggested matching search term 'MS Project' **(24).** Subsequently said recruiter will enter the keyword 'engineer' in order to select the suggested matching search term 'Engineer' **(24).**

When the recruiter has selected a suggested matching search term, the search button **(30)** can be activated.

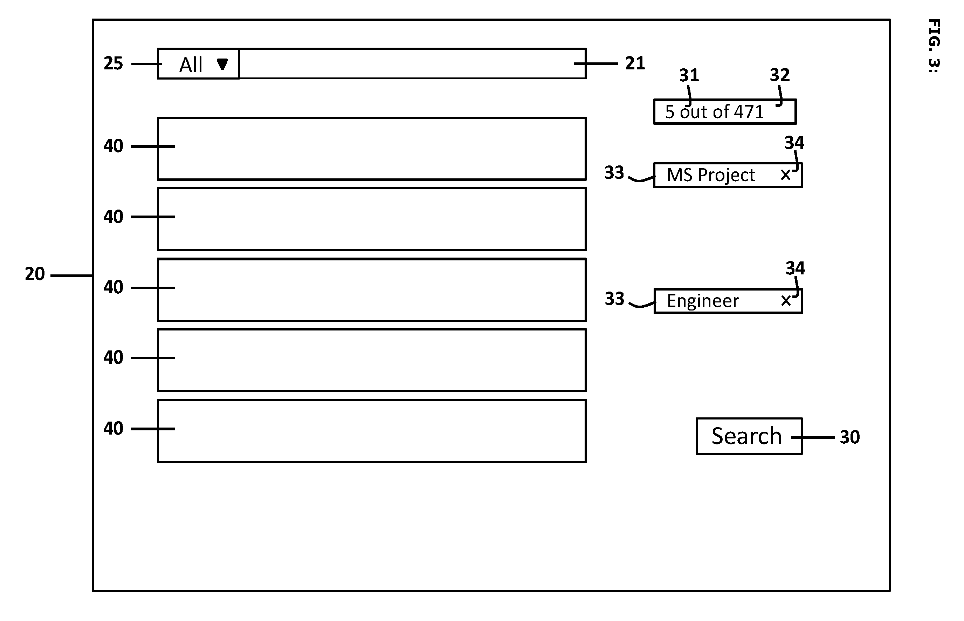

As a result the web page will be provided as illustrated in **FIG. 3****.** Both intermediate selected suggested matching search terms 'MS Project' **(24)** and 'Engineer' **(24)** are displayed on the web page **(20).** One or both provided selections **(33)** can be removed from the CV search by clicking the remove button **(34).** This gives a gain on trial and error knowledge building and enhances the learnability of the job portal website for the recruiter.

The number of matching CV results **(31)** found in the job portal database is provided on the web page **(20)** corresponding to the intermediate search query based on said selected suggested matching search terms. Also the total amount of CV results **(32)** in the job portal database is displayed on said webpage **(20).**

The web page also comprises a search button **(30),** whereby the recruiter requests for said matching CV results.

Optionally, CV results **(40)** can be provided in preview mode. This means that when the recruiter has selected a one or more suggested matching search terms, a preview of CV results **(40)** appear, wherein contact information is still hidden. This allows the implementation of credits on the job portal web page. In return of credits, the recruiter will be able to view the contact information in CV results. In preview mode, other actions on the CV results **(40)** can also be disabled. When the user activates the search button **(30),** said the results will be displayed in normal mode. Once the recruiter ticks the search button **(30),** credits are used.

In this example the recruiter will click on said search button **(30)** in order to be provided CV results **(41).** Subsequently said recruiter will click on both displayed selected suggested matching search terms **(33)** in order to be provided with a sliding bar **(35)** to be able to adjust the relevancy of these selected suggested matching search terms. As a result the web page will be provided as illustrated in

### FIG. 4.

On click suggested matching search terms **(33),** a measurement indicator or sliding bar **(35)** appears. Herewith the recruiter can set the importance of the selected criteria, e.g. low to high or discrete levels, etc. eventually depending on the corresponding category dimension.

The web page **(20)** provides CV results **(41)** corresponding to said determined CV search. A CV result **(41)** can for example comprise:
- a picture of a job candidate.
- the education level, i.e. total years of education and final degree upon end education.
- the work experience, i.e. total years of experience and number of years relevant to the search.
- detailed work experience, e.g. last three jobs comprising work title, company and skills obtained or used in said job.
- an inline comment field.
- an overview of actions performed by anyone within the company and when the actions have been performed.
- Contact information, such as name, email and phone number.

If parts of the contact info are missing, a button can be provided, allowing the recruiter to request information from the candidate. On clicking this button, an email is sent to the candidate indicating that said recruiter has requested this information in order to update their CV. Hereby an interactive communication model between recruiter and candidate is created.

Optionally, one or more parts of said CV results **(41)** are highlighted, wherein said one or more parts match one or more of said selected intermediate suggested matching search terms **(33)** and/or a selected widget option or category.

Alternatively, said CV results **(41)** could be provided to the recruiter as dynamic partial CV results. A dynamic partial CV result consists of one or more parts of said CV result, that match one or more of said selected intermediate suggested matching search terms and/or selected widget option or category. This provides a more clear flow of information to the recruiter.

Alternatively, the recruiter can further refine said search by entering Boolean search queries in said freetext box **(21).** Hereby, Boolean operators such as e.g. "AND", "OR" and "NOT" can be used.

Optionally, the recruiter can choose to rank said CV results **(41).** Preferably, said ranking order is determined according to relevancy or to newness of said CV results **(41).**

The web page comprises call-to-action elements, such as a CV agent **(36)** and a Save button **(37).** Also individual CV results **(41)** can for example be saved.

Although the present invention has been described with reference to preferred embodiments thereof, many modifications and alternations may be made by a person having ordinary skill in the art without departing from the scope of this invention which is defined by the appended claims.

## Claims

1. Method for searching curriculum vitae's on a job portal website, comprising the following computer-implemented steps:
- determining an intermediate CV search by executing following steps:
a) receiving one or more keywords from a recruiter;
b) analyzing said keyword(s);
c) providing at least one suggested matching search term and corresponding category dimension from a web server;
d) said recruiter selecting one of said suggested matching search terms;
- refining said intermediate CV search by one or more subsequent iterations of said steps a to d;
- providing CV results of a CV search to said recruiter, wherein said CV search is generated based on said selected suggested matching search terms.

2. The method of claim 1 wherein said received one or more keywords from a recruiter comprise partially entered one or more keywords.

3. The method according to claim 2 wherein steps a, b and c are re-executed when said recruiter amends said one or more keywords by one or more characters.

4. The method according to any of the preceding claims 1 to 3 wherein intermediate selected suggested matching search terms are displayed.

5. The method according to claim 4 wherein one or more intermediate selected suggested matching search terms can be removed from said CV search.

6. The method according to any of the preceding claims 1 to 5 wherein ranking said suggested matching search terms is based on a category dimension hierarchy.

7. The method according to any of the preceding claims 1 to 6 wherein said suggested matching search terms are provided in a dropdown list.

8. The method according to any of the preceding claims 1 to 7 wherein any suggested matching search term and corresponding category dimension of said at least one suggested matching search term and corresponding category dimension from a web server is provided as a list item in a dropdown list.

9. The method according to any of the preceding claims 1 to 8 wherein the relevancy of the one or more selected suggested matching search terms can be adjusted.

10. The method according to any of the preceding claims 1 to 9 wherein one or more call-to-action elements are provided, preferably said one or more call-to-action elements comprising a CV agent and a Save button.

11. The method according to any of the preceding claims 1 to 10 wherein said CV results can be provided in a preview mode.

12. The method according to any of the preceding claims 1 to 11 wherein said provided CV results are ranked based on relevancy.

13. The method according to any of the preceding claims 1 to 12 wherein said recruiter is replaceable by a job seeker and CV is replaceable by job listing.

14. A server for searching curriculum vitae's on a job portal website, comprising at least one processor, the at least one processor configured to:
- determining an intermediate CV search by executing following steps:
a) receiving one or more keywords from a recruiter;
b) analyzing said keyword(s);
c) providing at least one suggested matching search term and corresponding category dimension from a web server;
d) said recruiter selecting one of said suggested matching search terms;
- refining said intermediate CV search by one or more subsequent iterations of said steps a to d;
- providing CV results of a CV search to said recruiter, wherein said CV search is generated based on said selected suggested matching search terms.

15. A computer program product for searching curriculum vitae's on a job portal website, said computer program product comprising at least one computer-readable storage medium having computer-readable program code portions stored therein, the computer-readable program code portions comprising instructions for:
- determining an intermediate CV search by executing following steps:
a) receiving one or more keywords from a recruiter;
b) analyzing said keyword(s);
c) providing at least one suggested matching search term and corresponding category dimension from a web server;
d) said recruiter selecting one of said suggested matching search terms;
- refining said intermediate CV search by one or more subsequent iterations of said steps a to d;
- providing CV results of a CV search to said recruiter, wherein said CV search is generated based on said selected suggested matching search terms.
